# EUROPEAN PATENT SPECIFICATION

(11) **EP 3 743 197 B1**
(45) Date of publication and mention of the grant of the patent: **21.08.2024**
(21) Application number: 19703648.6
(22) Date of filing: 25.01.2019
(51) Int. Cl.: B01D 53/56, B01D 53/79, F23J 7/00, F23J 15/00

(54) **UREA INJECTION LANCE**
HARNSTOFFEINBLASLANZE
LANCE D'INJECTION D'URÉE

(30) Priority: 26.01.2018 EP 18153665
(43) Date of publication of application: 02.12.2020
(73) Proprietor: Yara International ASA, 0277 Oslo (NO)
(72) Inventor: RUNGGER, Werner, 39030 San Martino in Badia BZ - Bolzano (IT)
(74) Representative: De Clercq & Partners
(86) International application number: PCT/EP2019/051821
(87) International publication number: WO 2019/145461

(56) References cited:
- WO-A1-2015/035709
- CN-A- 104 888 990
- US-A1- 2007 003 890
- SUNG DAE YIM ET AL: "Decomposition of Urea into NH 3 for the SCR Process", INDUSTRIAL & ENGINEERING CHEMISTRY RESEARCH, vol. 43, no. 16, 7 February 2004 (2004-02-07), pages 4856 - 4863, XP055487937, ISSN: 0888-5885, DOI: 10.1021/ie034052j

## Description

### TECHNICAL FIELD OF THE APPLICATION

The present invention relates to the field of injection lances for use in selective non-catalytic reduction (SNCR) systems.

### BACKGROUND OF THE APPLICATION

In operating fossil fuel burning facilities such as power plants, incinerators, and cement kilns, special measures are taken to ensure that exhaust gases emanating therefrom have a minimal impact on the environment. One of these special measures is selective non-catalytic reduction (SNCR), which is a technology in which a reducing agent is added to an exhaust gas stream. The SNCR technology ensures that potentially harmful substances such as nitrogen oxides (NOₓ) are converted to harmless products such as nitrogen and water. Documents WO 2015/035709 A1 and CN 104 888 990 A disclose reduction agent atomizing lances for selective non-catalytic (SNCR) denitration.

Unfortunately, existing SNCR technologies designed to reach the central area penetrating the boiler with lances suffer from a number of disadvantages. One disadvantage is that existing SNCR technologies are arranged with injection lances having a large diameter. Another disadvantage of existing SNCR technologies is that they may entail the risk of damaging the boilers in which reducing agent is added.

Accordingly, there is a need for systems which overcome one or more of the above-mentioned deficiencies. In particular, there is a need for injection lances which can be cooled efficiently, which have a small diameter, and which do not entail a risk of damaging boilers to which they add reducing agents.

### SUMMARY OF THE APPLICATION

It is an object of the present invention to provide systems and methods which meet one or more of the above needs.

Accordingly, provided herein are injection lances, comprising an inner tube, a central tube, and an outer tube, wherein
- the inner tube has a smaller diameter than the central tube, and the central tube has a smaller diameter than the outer tube;
- the inner tube is disposed within the central tube, and the central tube is disposed within the outer tube;
- the central tube ends in an atomization nozzle;
- the inner tube ends in a liquid outlet, with the atomization nozzle adjacently disposed to the liquid outlet, in such a way that a liquid exiting the liquid outlet of the inner tube is atomized by the atomization nozzle via an atomization gas flowing between the inner tube and the central tube;
- the outer tube ends in an injection opening, in particular comprising an injection nozzle;
- the injection lance comprises a decomposition zone between the atomization nozzle and the injection opening, the decomposition zone being adapted to decompose a reducing agent precursor; and
- the decomposition zone and the injection opening of the outer tube are in fluid connection with the volume between the central tube and the outer tube for introducing a cooling gas in the decomposition zone.

The distance between the atomization nozzle and the injection opening is between 1.0 and 15.0 m, more in particular between 2.5 and 14.0 m, more in particular between 5.0 and 13.0 m, more in particular between 7.0 and 12.0 m, and most in particular between 9.0 and 11.0 m.

In some embodiments, the injection lance as disclosed herein provides that the outer tube is closed between the atomization nozzle and the injection opening. In other words, in some embodiments, the outer tube does not comprise any openings between the atomization nozzle and the injection opening.

In some embodiments the injection lance as disclosed herein provides that the inner tube, the central tube, and/or the outer tube are made out of stainless steel, in particular high temperature resistant stainless steel.

Also disclosed herein is a flue gas treatment system, comprising a boiler and an injection lance as disclosed herein, wherein
- the boiler comprises a wall;
- the injection lance projects through the wall of the boiler; and
- the decomposition zone of the injection lance is located inside the boiler.

In some embodiments the flue gas treatment system as disclosed herein provides that:
- the injection lance comprises a first end and a second end;
- the first end is located inside the boiler and the second end is located outside the boiler;
- at the first end, an injection opening, in particular comprising an injection nozzle, is arranged for injecting a reducing agent in a flue gas stream in the boiler;
- at the second end, a liquid duct located within the inner tube is fluidly connected to a supply line for providing a reducing agent precursor, an atomization gas duct located between the inner tube and the central tube is fluidly connected to an atomization gas supply line, and a cooling gas duct located between the central tube and the outer tube is fluidly connected to a cooling gas supply line.

In some embodiments, the flue gas treatment system as disclosed herein provides that the injection lance extends inside the boiler for a distance of 1.0 to 15.0 m, more in particular between 2.5 and 14.0 m, more in particular between 5.0 and 13.0 m, more in particular of 7.0 to 12.0 m, and most in particular of 9.0 to 11.0 m.

In some embodiments, the flue gas treatment system as disclosed herein provides that the atomization gas duct ends in an atomization nozzle which is located inside the boiler.

Also disclosed herein is a method for injecting a reducing agent in a flue gas treatment system via an injection lance according to claims 1-4, comprising an inner tube, a central tube ending in an atomization nozzle and an outer tube ending in an injection opening, the method comprising the steps:
- providing a reducing agent precursor liquid through a liquid duct located in the inner tube of the injection lance;
- providing an atomizing gas through an atomizing gas duct located between the central tube and the inner tube of the injection lance;
- providing a cooling gas through a cooling gas duct located between the outer tube and the central tube of the injection lance;
- atomizing the reducing agent precursor by means of atomizing gas, thereby obtaining an atomized gaseous reducing agent precursor;
- carrying the atomized gaseous reducing agent precursor through a decomposition zone by means of cooling gas, thereby decomposing the reducing agent precursor and obtaining a gaseous reducing agent, wherein the decomposition zone is situated between the atomization nozzle and the injection opening and wherein the distance between the atomization nozzle and the injection opening is between 1.0 and 15.0 m; and
- injecting the gaseous reducing agent through an injection opening in the flue gas treatment system;
wherein the injection opening is maintained at a temperature of at least 200.0 °C, wherein the temperature of the outer tube is at least 200.0 °C and wherein the atomization gas, the cooling gas, the atomized reducing agent precursor, and the reducing agent are maintained at a temperature below 600.0 °C.

Also disclosed herein is a method for treating a flue gas by means of a flue gas treatment system according to claims 6-8, the method comprising the steps:
- providing a reducing agent precursor liquid through the liquid duct;
- providing an atomizing gas through the atomizing gas duct;
- providing a cooling gas through the cooling gas duct;
- atomizing the reducing agent precursor by means of the atomizing gas, thereby obtaining an atomized gaseous reducing agent precursor;
- carrying the atomized gaseous reducing agent precursor through a decomposition zone by means of a cooling gas, thereby decomposing the reducing agent precursor and obtaining a gaseous reducing agent; and
- injecting the gaseous reducing agent through the injection opening in a flue gas in the boiler;
wherein the injection opening is maintained at a temperature of at least 200.0 °C, wherein the temperature of the outer tube is at least 200.0 °C and wherein the atomization gas, the cooling gas, the atomized reducing agent precursor, and the reducing agent are maintained at a temperature below 600.0 °C.

In some embodiments, the method provides that the injection opening is maintained at a temperature between 200.0 and 400.0°C.

In some embodiments, the method as disclosed herein provide that the reducing agent precursor is a liquid, more in particular wherein the reducing agent precursor is an aqueous urea solution and/or wherein the atomization gas and/or the cooling gas is air.

### DESCRIPTION OF THE FIGURES

The following description of the figures of specific embodiments of the invention is only given by way of example and is not intended to limit the present explanation, its application or use. In the drawings, identical reference numerals refer to the same or similar parts and features.
**Fig. 1** shows an embodiment of an injection lance according to the present application;
**Fig. 2** shows the injection lance as shown in Fig. 1 installed in a boiler.
**Fig. 3** shows the calculated temperature profile of the outer tube surrounding the decomposition zone **(****Fig 3a****)** and the mixture in the decomposition zone **(****Fig. 3b****).**

The following reference numerals are used in the description and figures: 100 - injection lance
101 - inner tube
102 - central tube
103 - outer tube
105 - first end
106 - second end
110 - liquid duct
111 - liquid outlet
120 - atomization gas duct
121 - atomization nozzle
130 - cooling gas duct
131 - decomposition zone
132 - injection opening
200 - boiler
210 - boiler wall.

### DETAILED DESCRIPTION OF THE APPLICATION

As used below in this text, the singular forms "a", "an", "the" include both the singular and the plural, unless the context clearly indicates otherwise. The terms "comprise", "comprises" as used below are synonymous with "including", "include" or "contain", "contains" and are inclusive or open and do not exclude additional unmentioned parts, elements or method steps. Where this description refers to a product or process which "comprises" specific features, parts or steps, this refers to the possibility that other features, parts or steps may also be present, but may also refer to embodiments which only contain the listed features, parts or steps. The enumeration of numeric values by means of ranges of figures comprises all values and fractions in these ranges, as well as the cited end points. The term "approximately" as used when referring to a measurable value, such as a parameter, an amount, a time period, and the like, is intended to include variations of +/- 10% or less, preferably +/-5% or less, more preferably +/-1 % or less, and still more preferably +/-0.1 % or less, of and from the specified value, in so far as the variations apply to the invention disclosed herein. It should be understood that the value to which the term "approximately" refers per se has also been disclosed. Unless defined otherwise, all terms disclosed in the invention, including technical and scientific terms, have the meaning which a person skilled in the art usually gives them. For further guidance, definitions are included to further explain terms which are used in the description of the invention.

An injection lance according to the present application comprises an atomization nozzle, an injection opening, in particular comprising an injection nozzle, and a decomposition zone between the atomization nozzle and the injection opening. In the decomposition zone, a reducing agent precursor can be decomposed to form a gaseous reducing agent.

More in particular, the injection lance as described herein comprises an inner tube, a central tube, and an outer tube. The three tubes each have a different diameter: the inner tube has a smaller diameter compared to the central tube, and the central tube has a smaller diameter compared to the outer tube. Also, the inner tube is disposed within the central tube, and the central tube is disposed within the outer tube. The inner tube ends in a liquid outlet. The central tube ends in an atomization nozzle, with the atomization nozzle adjacently disposed to the liquid outlet of the inner tube, particularly in such a way that a liquid exiting the liquid outlet of the inner tube is atomized by the atomization nozzle via an atomization gas flowing between the inner tube and the central tube. The outer tube ends in an injection opening, in particular comprising an injection nozzle. Between the atomization nozzle and the injection opening, the injection lance comprises a decomposition zone. In other words, the inner tube is shorter and thinner compared to the central tube, and is disposed within the central tube. The central tube, in turn, is shorter and thinner compared to the outer tube. The inner tube is disposed inside the central tube, and the central tube is disposed inside the outer tube. Between the atomization nozzle and the injection opening, the injection lance comprises an oblong space within the outer tube, i.e. the decomposition zone.

The decomposition zone is the region in the outer tube between the atomization nozzle and the injection opening, in particular comprising an injection nozzle. The decomposition zone is adapted to decompose a reducing agent precursor. In other words, the decomposition zone and the injection opening of the outer tube are in fluid connection with (i) the inner tube and (ii) the volume between the inner tube and the central tube, particularly via the atomization nozzle at the end of the central tube, as well as with (iii) the volume between the central tube and the outer tube.

The injection lance as described herein allows injecting a reducing agent in a flue gas stream. In particular, the injection lance as described herein is especially useful for receiving a reducing agent precursor, for converting the reducing agent precursor into a gaseous reducing agent, and for delivering the reducing agent to the flue gas stream. One particularly useful reducing agent precursor is urea which may be provided as an aqueous solution. During normal operation of the injection lance, the aqueous urea solution is atomized by means of atomization gas, e.g. air, and is carried to the decomposition zone by means of cooling gas, which may also be air. In other words, the decomposition zone in the injection lance according to the present application comprises an inlet for the atomized reducing agent precursor (i.e. the atomization nozzle), an inlet for the cooling gas (i.e. the end of the annular duct between the central tube and the outer tube), and an outlet for the reducing agent (i.e. the injection opening). In the decomposition zone, urea decomposes to form ammonia. The ammonia can then be injected in a flue gas stream through the injection opening, in particular comprising an injection nozzle. By using the decomposition zone in the injection lance, damage to the boiler by the aggressive liquid urea is avoided.

In addition, the injection lance according to the present application has the advantage of being thin, i.e. of having a small diameter, and of avoiding the risk of damaging boilers or super heaters in which the injection lance is used. Finally, no complicated cooling systems are required for operating the present injection lances. Standard prior art lances used for the injection of reagent are typically cooled by a liquid such as water and require that the temperature of the cooling liquid must be kept within a specific temperature range to avoid condensation of acid gases which would cause corrosion of the steel surfaces. In contrast, the injection lance as described herein does not require such a costly cooling system, because ambient air and a fan can be used as a cooling system for the injection lance.

The injection lance as disclosed herein comprises an inner tube, a central tube, and an outer tube. In some embodiments, the inner tube has an outer diameter ranging between 5.0 and 15.0 mm, in particular between 6.0 and 12.0 mm and more in particular between 8.0 and 10.0 mm. The inner diameter of the inner tube ranges between 3.0 and 14.0 mm, in particular between 4.0 and 10.0 mm and more in particular between 6.0 and 8.0 mm. The central tube has an outer diameter ranging between 15.0 and 33.0 mm, in particular between 17.0 and 25.0 mm and more in in particular between 20.0 and 22.0 mm. The inner diameter of the central tube ranges between 10.0 and 26.0 mm, in particular between 12.5 and 22.5 mm and more in particular between 15.0 and 20.0 mm. The outer tube has an outer diameter ranging between 25.0 and 150.0 mm, in particular between 30.0 and 70.0 mm, more in particular between 35.0 and 40.0 mm. The inner diameter of the outer tube ranges between 20.0 and 145.0 mm, in particular between 22.5 and 65.0 mm and more in particular between 25.0 and 30.0 mm.

The distance between the atomization nozzle and the injection opening is between 1.0 and 15.0 m, more in particular between 2.5 and 14.0 m, more in particular between 5.0 and 13.0 m, more in particular between 7.0 and 12.0 m, and most in particular between 9.0 and 11.0 m. The distance between the atomization nozzle and the injection opening corresponds to the length of the decomposition zone. Accordingly, the decomposition zone has a length between 1.0 and 15.0 m, more in particular between 2.5 and 14.0 m, more in particular between 5.0 and 13.0 m, more in particular between 7.0 and 12.0 m, and most in particular between 9.0 and 11.0 m. This length is adequate for ensuring substantially complete decomposition of the reducing agent precursor in the decomposition zone.

In some embodiments, the outer tube is closed between the atomization nozzle and the injection opening, in particular the injection nozzle. In other words, in some embodiments, the outer tube comprises an oblong hollow space extending along the decomposition zone. Along the extent of the decomposition zone, the outer tube does not comprise side openings. In other words, the decomposition zone comprises an inlet for the atomized reducing agent precursor (i.e. the atomization nozzle), an inlet for the cooling gas (i.e. end of the annular duct between the central tube and the outer tube), and an outlet for the reducing agent (i.e. the injection nozzle). Apart from these two inlets and the outlet, the decomposition zone does not comprise any further openings.

During normal operation, reducing agent precursor is atomized and brought into the decomposition zone by means of a carrier gas. The carrier gas also functions as a cooling gas. When the outer tube is closed between the atomization nozzle and the injection opening, the reducing agent precursor and decomposition products thereof are forced to travel through the entire decomposition zone before being injected into a flue gas stream. When urea is used as a reducing agent precursor, the decomposition products comprise ammonia and carbon dioxide.

In other embodiments, the outer tube comprises more than one injection opening, for optimizing the distribution of the reducing agent in the boiler.

In particular embodiments, the injection lance as described herein comprises a liquid duct, an atomization gas duct, and a cooling gas duct. The liquid duct is located within the inner tube and is suitable for transporting a liquid reducing agent precursor. The atomization gas duct is located between the inner tube and the central tube, and it is suitable for transporting an atomization gas. The cooling gas duct is located between the central tube and the outer tube, and it is suitable for transporting a cooling gas. This configuration allows bringing atomized reducing agent precursor to the decomposition zone in an efficient and safe manner. In other words, the decomposition zone and the injection opening of the outer tube are in fluid connection with the liquid duct, the atomization gas duct and the cooling gas duct.

In some embodiments, the inner tube, the central tube, and/or the outer tube comprise stainless steel. In particular, they substantially consist of stainless steel, in particular comprising 48.9 wt.% and 55.5 wt.% iron, less than 0.020 wt.% C, 1.50 to 3.00 wt.% Si, less than 0.020 wt.% Mn, less than 0.045 wt.% P, less than 0.015 wt. % S, 24.00 to 26.00 wt.% Cr, 19.00-22.00 wt.% Ni, and in particular less than 1100 ppm other compounds. Injection lances manufactured from such materials are highly temperature resistant and resilient.

Further provided herein is a flue gas treatment system comprising a boiler and an injection lance. The injection lance has been described above. The boiler comprises a wall through which the injection lance projects. The decomposition zone of the injection lance is located inside the boiler. In some embodiments, the distance between the wall and the decomposition zone is between 0.5 m and 4.0 m. By providing the decomposition zone of the injection lance inside the boiler, heat from flue gases in the boiler can be used for heating the decomposition zone, and for decomposing the reducing agent precursor. In particular, the injection lance is positioned vertically inside the boiler, in particular hanging from the boiler roof. Alternatively the injection lance is positioned horizontally inside the boiler, extending from the walls of the boiler and in particular connecting one boiler wall with another boiler wall.

In some embodiments, the injection lance comprises a first end and a second end. The first end is located inside the boiler and the second end is located outside the boiler. The first end comprises an injection opening, in particular comprising an injection nozzle. The injection opening is arranged for injecting a reducing agent in a flue gas stream which, during normal operation, streams through the boiler. In a particular embodiment the injection opening comprises an injection nozzle. At the second end, the liquid duct is in fluid connection with a supply line for providing a reducing agent precursor, the atomization gas duct is in fluid connection with an atomization gas supply line, and the cooling gas duct is in fluid connection with a cooling gas supply line. This arrangement allows efficiently supplying reducing agent precursor, atomization gas, and cooling gas to the injection lance while simultaneously allowing the injection lance to supply gaseous reducing agent to a flue gas stream.

In some embodiments, the injection lance extends inside the boiler for a distance of 1.0 to 15.0 m, more in particular between 2.5 and 14.0 m, more in particular between 5.0 and 13.0 m, in particular of 7.0 to 12.0 m, and most in particular of 9.0 to 11.0 m. Optionally, the distance along with the injection lance extends inside the boiler corresponds to the distance between the atomization nozzle and the injection opening, which corresponds to the length of the decomposition zone. Accordingly, substantially complete decomposition of the reducing agent precursor in the decomposition zone is ensured.

In some embodiments, the atomization gas duct ends in an atomization nozzle which is located inside the boiler. This ensures that atomization occurs in the correct temperature range.

In some embodiments, the distance between the atomization nozzle and the wall of the boiler is between 0.50 m and 4.0 m.

Further provided is a method for treating a flue gas by means of a flue gas treatment system as described above. The method comprises the step of providing a reducing agent precursor through the liquid duct, and an atomizing gas is provided through the atomizing gas duct. The reducing agent precursor is atomized by means of the atomizing gas, thereby obtaining an atomized reducing agent precursor. The atomized reducing agent precursor is carried to the decomposition zone by means of a cooling gas. In the decomposition zone, the reducing agent precursor is decomposed, thereby obtaining a gaseous reducing agent. The reducing agent is injected in the boiler through the injection opening, in particular comprising an injection nozzle. By way of this method, a reducing agent can be efficiently added to a flue gas in a safe way.

In an embodiment, the reducing agent precursor is a liquid. In particular, the reducing agent precursor is advantageously an aqueous solution of urea, for example a solution comprising between 50 and 95% water, and between 5 and 50 wt.% urea. In particular, aqueous solution of urea comprises between 32.5% and 45% urea.

In some embodiments, the atomization gas and/or the cooling gas is air. Alternatively, the atomization gas and/or the cooling gas is an inert gas, for example nitrogen gas. In particular, the atomization gas is provided at a pressure between 1 and 5 barg, and at a flow rate between 2 and 30 Nm³/hour. This allows finely dispersing the reducing agent precursor in a gas stream comprising the cooling gas and the atomization gas.

In an embodiment, the cooling gas is provided at a pressure between 0.05 and 2 bar, and at a flow rate between 20 and 200 Nm³/hour.

The injection opening is maintained at a temperature of at least 200.0°C. The temperature of the outer tube is at least 200.0°C. The atomization gas, the cooling gas, the atomized reducing agent precursor, and the reducing agent are maintained at a temperature below 600.0°C.

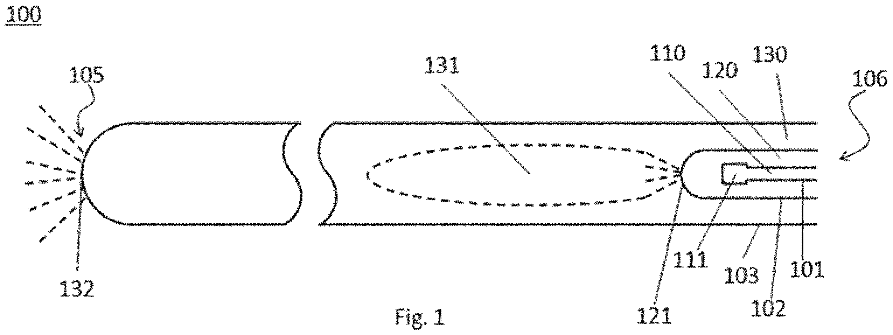

An exemplary embodiment of an injection lance (100) according to the present application is schematically shown in FIG. 1 as provided herein. This injection lance (100) comprises a first end (105) and a second end (106). At the first end (105), the injection lance (100) comprises an injection opening (132) for injecting a gaseous stream comprising a reducing agent in a flue gas. At the second end (106), the injection lance (100) comprises an inner tube (101), a central tube (102), and an outer tube (103). The inner tube (101) has a diameter ranging between 5.0 and 15.0 mm, in particular between 6.0 and 12.0 mm and more in particular between 8.0 and 10.0 mm. The central tube (102) has a diameter ranging between 15.0 and 33.0 mm, in particular between 17.0 and 25.0 mm, in particular between 20.0 and 22.0 mm. The outer tube (103) has a diameter ranging between 25.0 and 150 mm, in particular between 30.0 and 70.0 mm, more in particular between 35.0 and 40.0 mm.

The central tube (102) is disposed within the outer tube (103) and the inner tube (101) is disposed within the central tube (102). This arrangement results in the formation of a liquid duct (110), an atomization gas duct (120), and a cooling gas duct (130). The liquid duct (110) is located within the inner tube (101). The atomization gas duct (120) is an annular space between the inner tube (101) and the central tube (102). The cooling gas duct (130) is an annular space between the central tube (102) and the outer tube (103).

The inner tube (101) ends in a liquid outlet (111). The central tube (102) ends in an atomization nozzle (121). The atomization nozzle (121) is adjacently disposed to the liquid outlet (111), at a distance between 0.10 to 3.0 cm. The outer tube (103) ends at the first end (105). At the first end (105), the outer tube (103) comprises an injection opening (132). The distance between the injection opening (132) and the atomization nozzle (121) is 1.0-15 m. Between the injection opening (132) and the atomization nozzle (121), the injection lance (100) comprises a decomposition zone (131), which is an oblong space within the outer tube (103).

The injection lance (100) may be made out of stainless steel according to Euronorm 1.4841, which is a stainless steel grade comprising 48.9 wt.% and 55.5 wt.% iron, less than 0.020 wt.% C, 1.50 to 3.00 wt.% Si, less than 0.020 wt.% Mn, less than 0.045 wt.% P, less than 0.015 wt. % S, 24.00 to 26.00 wt.% Cr, 19.00-22.00 wt.% Ni, and less than 1100 ppm other compounds.

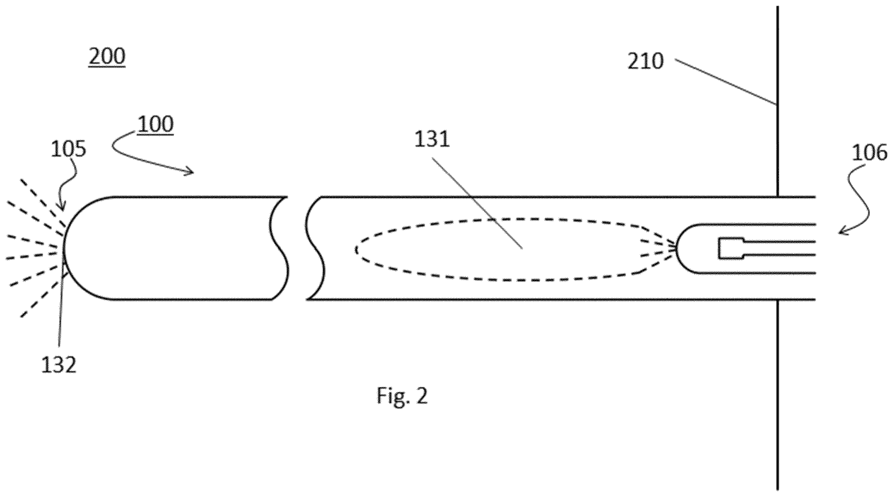

As can be seen in FIGs. 1 and 2, during normal operation, the injection lance (100) projects through the wall (210) of a boiler (200) such that the inner tube (101) and the central tube (102) are outside the boiler (200). The outer tube (103) extends inside the boiler (200) for a distance between 1.0 and 15 m.

Through the liquid duct (110) inside the inner tube (101), an aqueous urea solution is provided to the atomization nozzle (121). Concurrently, atomization air is provided to the atomization nozzle (121) via the atomization gas duct (120), which is an annular space between the inner tube (101) and the central tube (102). At the atomization nozzle (121), the aqueous urea solution is atomized by means of the atomization air. The atomization air is typically provided at a high pressure and a low flow rate, and serves to finely disperse the aqueous urea solution in a gas. The atomized aqueous urea solution is entrained through the region between the atomization nozzle (121) and the first end (105) of the injection lance by means of cooling air which is introduced in the decomposition zone via the cooling gas duct (130). The cooling air is provided at a low pressure and a high flow rate, and serves to cool the injection lance (100) and to entrain the finely dispersed aqueous urea solution.

The region in the injection lance (100) between the atomization nozzle (121) at the end of the atomization gas duct (120) and the injection opening (132) at the first end (105) of the injection lance (100) serves as a decomposition zone (131) for urea. The length of this decomposition zone, 1 to 15 meters, ensures a sufficiently long residence time for urea to decompose inside the injection lance. During normal operation, the decomposition zone (131) is located inside the boiler (200) in which the reducing agent is injected.

During normal operation, the outer tube (103) serves as a heat shield and the part of the outer tube (103) which is inside the boiler (200) has a temperature up to 900°C. At the first end (105) of the injection lance, i.e. at the end of the outer tube (103), an injection opening (132) is arranged for injecting decomposed urea in flue gasses. The injection opening (132) has a temperature of at least 200°C. The atomization nozzle (121) at the end of the central tube (102) is positioned at a place where the temperature of the outer tube (103) has a temperature of at least 200°C to avoid the formation of urea salts on the outer tube (103). In addition, the gasses and gas mixtures inside the injection lance (100), particularly inside the part of the injection lance (100) that is inside the boiler (200), are kept at a temperature below 600°C in order to avoid oxidation.

In an exemplary embodiment, the temperature profile within an injection lance according to the present application was calculated. To this end, the lance was (theoretically) divided in a number of sectors (with identical volume) (for instance a 10m long lance (or part thereof) may be divided in 10 or more sectors). For each sector, an (average) mass and heat balance was calculated.

Upstream from the atomization nozzle, the injection lance comprises an outer tube, a central tube and an inner tube, with cooling air flowing between the outer tube and the central tube (or cooling gas duct), compressed atomizing air flowing between the central tube and the inner tube (or atomizing gas duct) and a liquid urea solution flowing inside the inner tube (or reducing agent precursor duct). This part of the injection lance shows a fairly constant temperature profile, with the (sector-average) temperature of the outer tube being about 800-900°C, the (sector-average) temperature of the central tube being 300-450 °C and the temperature of the inner tube being about 30-32 °C.

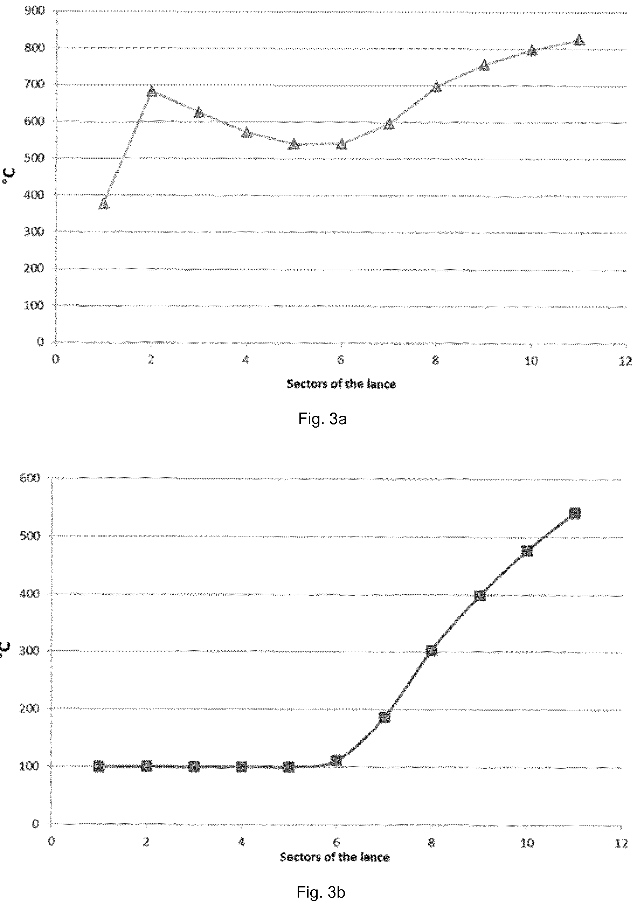

Downstream from the atomization nozzle, an atomized urea solution is sprayed in the decomposition zone. In this zone, the liquid urea is evaporating and decomposing. The decomposition zone (which is enclosed by the outer tube) thus comprises a mixture of a gasified urea solution, atomizing air and cooling air (with the latter provided via a duct formed between the outer tube and the central tube). To simplify the calculation, the gasification temperature of the urea solution was approximated to 100 °C, instead of approximately 133 °C. Fig. 3a shows the (sector-average) temperature of the outer tube surrounding the decomposition zone. Fig. 3b shows the (sector-average) temperature of the mixture within the decomposition zone. Initially, both the temperature of the outer tube and the gas mixture remain fairly low and constant. Once the liquid urea solution is gasified, the temperature of both the outer wall and the mixture within the decomposition zone quickly rises to temperatures up to 500 - 600 °C.

By varying the flow rate of the cooling air in these calculations, the residence time in the lance to ensure the complete decomposition of the urea can be evaluated (with the residence time expressed as a number of sectors).

## Claims

1. Injection lance (100) comprising an inner tube (101), a central tube (102), and an outer tube (103), wherein
- the inner tube (101) has a smaller diameter than the central tube (102), and the central tube (102) has a smaller diameter than the outer tube (103);
- the inner tube (101) is disposed within the central tube (102), and the central tube (102) is disposed within the outer tube (103);
- the central tube (102) ends in an atomization nozzle (121);
- the inner tube (101) ends in a liquid outlet (111), with the atomization nozzle (121) adjacently disposed to the liquid outlet (111), in such a way that a liquid exiting the liquid outlet of the inner tube is atomized by the atomization nozzle via an atomization gas flowing between the inner tube and the central tube;
- the outer tube (103) ends in an injection opening (132);
- the injection lance comprises a decomposition zone (131) between the atomization nozzle (121) and the injection opening (132), the decomposition zone (131) being adapted to decompose a reducing agent precursor, wherein the distance between the atomization nozzle (121) and the injection opening (132) is between 1.0 and 15.0 m, and
- the decomposition zone (131) and the injection opening (132) of the outer tube (103) are in fluid connection with the volume between the central tube (102) and the outer tube (103) for introducing a cooling gas in the decomposition zone.

2. The injection lance (100) according to claim 1, wherein the distance between the atomization nozzle (121) and the injection opening (132) is between 2.5 and 14.0 m, more in particular between 5.0 and 13.0 m, more in particular between 7.0 and 12.0 m, and most in particular between 9.0 and 11.0 m.

3. The injection lance (100) according to claim 1 or 2, wherein the outer tube (103) is closed between the atomization nozzle (121) and the injection opening (132).

4. The injection lance (100) according to any one of claims 1 to 3, wherein the inner tube (101), the central tube (102), and/or the outer tube (103) are made out of stainless steel.

5. Flue gas treatment system, comprising a boiler (200) and an injection lance (100) according to any one of claims 1 to 4, wherein
- the boiler (200) comprises a wall (210);
- the injection lance (100) projects through the wall (210) of the boiler (200); and
- the decomposition zone (131) of the injection lance (100) is located inside the boiler (200).

6. The flue gas treatment system according to claim 5, wherein
- the injection lance (100) comprises a first end (105) and a second end (106);
- the first end (105) is located inside the boiler (200) and the second end (106) is located outside the boiler (200);
- at the first end (105), an injection opening (132) is arranged for injecting a reducing agent in a flue gas stream in the boiler (200);
- at the second end (106), a liquid duct (110) located within the inner tube (101) is fluidly connected to a supply line for providing a reducing agent precursor, an atomization gas duct (120) located between the inner tube (101) and the central tube (102) is fluidly connected to an atomization gas supply line, and a cooling gas duct (130) located between the central tube (102) and the outer tube (103) is fluidly connected to a cooling gas supply line.

7. The flue gas treatment system according to claim 5 or 6, wherein the injection lance (100) extends inside the boiler (200) for a distance of 1.0 to 15.0 m, more in particular between 2.5 and 14.0 m, more in particular between 5.0 and 13.0 m, more in particular of 7.0 to 12.0 m, and most in particular of 9.0 to 11.0 m.

8. The flue gas treatment system according to claims 6 or 7, wherein the atomization gas duct (120) ends in an atomization nozzle (121) which is located inside the boiler (200).

9. Method for injecting a reducing agent in a flue gas treatment system via an injection lance (100) according to any one of claims 1 to 4, comprising an inner tube (101), a central tube (102) ending in an atomization nozzle, and an outer tube (103) ending in an injection opening (132), the method comprising the steps:
- providing a reducing agent precursor liquid through a liquid duct (110) located in the inner tube (101) of the injection lance (100);
- providing an atomizing gas through an atomizing gas duct (120) located between the inner tube (101) and the central tube (102) of the injection lance (100);
- providing a cooling gas through a cooling gas duct (130) located between the central tube (102) and the outer tube (103) of the injection lance (100);
- atomizing the reducing agent precursor by means of atomizing gas, thereby obtaining an atomized gaseous reducing agent precursor;
- carrying the atomized gaseous reducing agent precursor through a decomposition zone (131) by means of cooling gas, thereby decomposing the reducing agent precursor and obtaining a gaseous reducing agent, wherein the decomposition zone is situated between the atomization nozzle (121) and the injection opening (132) and wherein the distance between the atomization nozzle (121) and the injection opening (132) is between 1.0 and 15.0 m; and
- injecting the gaseous reducing agent through an injection opening (132) in the flue gas treatment system,
wherein the injection opening (132) is maintained at a temperature of at least 200.0 °C, wherein the temperature of the outer tube (103) is at least 200.0°C and wherein the atomization gas, the cooling gas, the atomized reducing agent precursor, and the reducing agent are maintained at a temperature below 600.0°C.

10. Method for treating a flue gas by means of a flue gas treatment system according to any one of claims 6 to 8, the method comprising the steps:
- providing a reducing agent precursor liquid through the liquid duct (110);
- providing an atomizing gas through the atomizing gas duct (120);
- providing a cooling gas through the cooling gas duct (130);
- atomizing the reducing agent precursor by means of the atomizing gas, thereby obtaining an atomized gaseous reducing agent precursor;
- carrying the atomized gaseous reducing agent precursor through a decomposition zone (131) by means of a cooling gas, thereby decomposing the reducing agent precursor and obtaining a gaseous reducing agent; and
- injecting the gaseous reducing agent through the injection opening (132) in a flue gas in the boiler (200),
wherein the injection opening (132) is maintained at a temperature of at least 200.0 °C, wherein the temperature of the outer tube (103) is at least 200.0°C and wherein the atomization gas, the cooling gas, the atomized reducing agent precursor, and the reducing agent are maintained at a temperature below 600.0°C.

11. The method according to claim 9 or 10, wherein the reducing agent precursor is a liquid, more in particular wherein the reducing agent precursor is an aqueous urea solution and/or wherein the atomization gas and/or the cooling gas is air.

## Patentansprüche

1. Injektionslanze (100), umfassend ein inneres Rohr (101), ein mittleres Rohr (102) und ein äußeres Rohr (103), wobei
- das innere Rohr (101) einen kleineren Durchmesser als das mittlere Rohr (102) aufweist und das mittlere Rohr (102) einen kleineren Durchmesser als das äußere Rohr (103) aufweist;
- das innere Rohr (101) innerhalb des mittleren Rohrs (102) angeordnet ist und das mittlere Rohr (102) innerhalb des äußeren Rohrs (103) angeordnet ist;
- das mittlere Rohr (102) in einer Zerstäubungsdüse (121) endet;
- das innere Rohr (101) in einem Flüssigkeitsauslass (111) endet, wobei die Zerstäubungsdüse (121) an den Flüssigkeitsauslass (111) angrenzend angeordnet ist, sodass eine aus dem Flüssigkeitsauslass des inneren Rohrs austretende Flüssigkeit durch die Zerstäubungsdüse über ein zwischen dem inneren Rohr und dem mittleren Rohr strömendes Zerstäubungsgas zerstäubt wird;
- das äußere Rohr (103) in einer Einblasöffnung (132) endet;
- die Einblaslanze einen Zersetzungsbereich (131) zwischen der Zerstäubungsdüse (121) und der Einblasöffnung (132) umfasst, wobei der Zersetzungsbereich (131) dazu eingerichtet ist, einen Reduktionsmittelvorläufer zu zersetzen, wobei die Entfernung zwischen der Zerstäubungsdüse (121) und der Einblasöffnung (132) zwischen 1,0 und 15,0 m beträgt, und
- der Zersetzungsbereich (131) und die Einblasöffnung (132) des äußeren Rohrs (103) mit dem Raum zwischen dem mittleren Rohr (102) und dem äußeren Rohr (103) in Fluidverbindung stehen, um ein Kühlgas in den Zersetzungsbereich einzuleiten.

2. Injektionslanze (100) nach Anspruch 1, wobei die Entfernung zwischen der Zerstäubungsdüse (121) und der Einblasöffnung (132) zwischen 2,5 und 14,0 m, insbesondere zwischen 5,0 und 13,0 m, insbesondere zwischen 7,0 und 12,0 m und ganz speziell zwischen 9,0 und 11,0 m beträgt.

3. Injektionslanze (100) nach Anspruch 1 oder 2, wobei das äußere Rohr (103) zwischen der Zerstäubungsdüse (121) und der Einblasöffnung (132) geschlossen ist.

4. Injektionslanze (100) nach einem der Ansprüche 1 bis 3, wobei das innere Rohr (101), das mittlere Rohr (102) und/oder das äußere Rohr (103) aus Edelstahl gefertigt ist/sind.

5. Abgasbehandlungssystem, umfassend einen Kessel (200) und eine Injektionslanze (100) nach einem der Ansprüche 1 bis 4, wobei
- der Kessel (200) eine Wand (210) umfasst;
- die Injektionslanze (100) durch die Wand (210) des Kessels (200) ragt und
- sich der Zersetzungsbereich (131) der Injektionslanze (100) innen Kessel (200) befindet.

6. Abgasbehandlungssystem nach Anspruch 5, wobei
- die Injektionslanze (100) ein erstes Ende (105) und ein zweites Ende (106) umfasst;
- sich das erste Ende (105) innen Kessel (200) befindet und sich das zweite Ende (106) außen Kessel (200) befindet;
- am ersten Ende (105) eine Einblasöffnung (132) zum Einblasen eines Reduktionsmittels in einen Abgasstrom im Kessel (200) angeordnet ist;
- am zweiten Ende (106) ein innerhalb des inneren Rohrs (101) angeordneter Flüssigkeitskanal (110) mit einer Versorgungsleitung zum Vorsehen eines Reduktionsmittelvorläufers in Fluidverbindung steht, wobei ein Zerstäubungsgaskanal (120), der sich zwischen dem inneren Rohr (101) und dem mittleren Rohr (102) befindet, mit einer Zerstäubungsgasversorgungsleitung in Fluidverbindung steht, und eine Kühlgaskanal (130), die sich zwischen dem mittleren Rohr (102) und dem äußeren Rohr (103) befindet, mit einer Kühlgasversorgungsleitung in Fluidverbindung steht.

7. Abgasbehandlungssystem nach Anspruch 5 oder 6, wobei sich die Injektionslanze (100) innerhalb des Kessels (200) in einer Entfernung von 1,0 bis 15,0 m, insbesondere zwischen 2,5 und 14,0 m, insbesondere zwischen 5,0 und 13,0 m, insbesondere von 7,0 bis 12,0 m und ganz speziell von 9,0 bis 11,0 m erstreckt.

8. Abgasbehandlungssystem nach Anspruch 6 oder 7, wobei der Zerstäubungsgaskanal (120) in einer Zerstäubungsdüse (121) endet, die sich innerhalb des Kessels (200) befindet.

9. Verfahren zum Einblasen eines Reduktionsmittels in einem Abgasbehandlungssystem über eine Injektionslanze (100) nach einem der Ansprüche 1 bis 4, umfassend ein inneres Rohr (101), ein mittleres Rohr (102), das in einer Zerstäubungsdüse endet, und ein äußeres Rohr (103), das in einer Einblasöffnung (132) endet, wobei das Verfahren die folgenden Schritte umfasst:
- Vorsehen einer Reduktionsmittelvorläuferflüssigkeit durch einen Flüssigkeitskanal (110), der sich im inneren Rohr (101) der Injektionslanze (100) befindet;
- Vorsehen eines Zerstäubungsgases durch einen Zerstäubungsgaskanal (120), der sich zwischen dem inneren Rohr (101) und dem mittleren Rohr (102) der Injektionslanze (100) befindet;
- Vorsehen eines Kühlgases durch einen Kühlgaskanal (130), der sich zwischen dem mittleren Rohr (102) und dem äußeren Rohr (103) der Injektionslanze (100) befindet;
- Zerstäuben des Reduktionsmittelvorläufers mittels des Zerstäubungsgases, wodurch ein zerstäubter, gasförmiger Reduktionsmittelvorläufer erhalten wird;
- Tragen des zerstäubten, gasförmigen Reduktionsmittelvorläufers durch einen Zersetzungsbereich (131) mittels eines Kühlgases, wodurch der Reduktionsmittelvorläufer zersetzt und ein gasförmiges Reduktionsmittel erhalten wird, wobei sich der Zersetzungsbereich zwischen der Zerstäubungsdüse (121) und der Einblasöffnung (132) befindet und wobei die Entfernung zwischen der Zerstäubungsdüse (121) und der Einblasöffnung (132) zwischen 1,0 und 15,0 m beträgt; und
- Einblasen des gasförmigen Reduktionsmittels durch eine Einblasöffnung (132) im Abgasbehandlungssystem,
wobei die Einblasöffnung (132) auf einer Temperatur von mindestens 200,0 °C gehalten wird,
wobei die Temperatur des äußeren Rohrs (103) mindestens 200,0 °C beträgt und wobei das Zerstäubungsgas, das Kühlgas, der zerstäubte Reduktionsmittelvorläufer und das Reduktionsmittel auf einer Temperatur von weniger als 600,0 °C gehalten werden.

10. Verfahren zum Behandeln eines Abgases mittels eines Abgasbehandlungssystems nach einem der Ansprüche 6 bis 8, wobei das Verfahren die folgenden Schritte umfasst:
- Vorsehen einer Reduktionsmittelvorläuferflüssigkeit durch den Flüssigkeitskanal (110);
- Vorsehen eines Zerstäubungsgases durch den Zerstäubungsgaskanal (120);
- Vorsehen eines Kühlgases durch den Kühlgaskanal (130);
- Zerstäuben des Reduktionsmittelvorläufers mittels des Zerstäubungsgases, wodurch ein zerstäubter, gasförmiger Reduktionsmittelvorläufer erhalten wird;
- Tragen des zerstäubten, gasförmigen Reduktionsmittelvorläufers durch einen Zersetzungsbereich (131) mittels eines Kühlgases, wodurch der Reduktionsmittelvorläufer zersetzt und ein gasförmiges Reduktionsmittel erhalten wird; und
- Einblasen des gasförmigen Reduktionsmittels durch die Einblasöffnung (132) in ein Abgas im Kessel (200),
wobei die Einblasöffnung (132) auf einer Temperatur von mindestens 200,0 °C gehalten wird,
wobei die Temperatur des äußeren Rohrs (103) mindestens 200,0 °C beträgt und wobei das Zerstäubungsgas, das Kühlgas, der zerstäubte Reduktionsmittelvorläufer und das Reduktionsmittel auf einer Temperatur von weniger als 600,0 °C gehalten werden.

11. Verfahren nach Anspruch 9 oder 10, wobei der Reduktionsmittelvorläufer eine Flüssigkeit ist, insbesondere wobei der Reduktionsmittelvorläufer eine wässrige Harnstoflösung ist und/oder wobei das Zerstäubungsgas und/oder das Kühlgas Luft ist/sind.

## Revendications

1. Lance d'injection (100) comprenant un tube interne (101), un tube central (102) et un tube externe (103),
- le tube interne (101) ayant un diamètre plus petit que le tube central (102), et le tube central (102) ayant un diamètre plus petit que le tube externe (103) ;
- le tube interne (101) étant disposé à l'intérieur du tube central (102), et le tube central (102) étant disposé à l'intérieur du tube externe (103) ;
- le tube central (102) se terminant par une buse d'atomisation (121) ;
- le tube interne (101) se terminant par une sortie de liquide (111), la buse d'atomisation (121) étant disposée de manière adjacente à la sortie de liquide (111), de sorte qu'un liquide sortant de la sortie de liquide du tube interne soit atomisé par la buse d'atomisation par l'intermédiaire d'un gaz d'atomisation circulant entre le tube interne et le tube central ;
- le tube externe (103) se terminant par une ouverture d'injection (132) ;
- la lance d'injection comprenant une zone de décomposition (131) entre la buse d'atomisation (121) et l'ouverture d'injection (132), la zone de décomposition (131) étant conçue pour décomposer un précurseur d'agent réducteur, la distance entre la buse d'atomisation (121) et l'ouverture d'injection (132) étant comprise entre 1,0 et 15,0 m, et
- la zone de décomposition (131) et l'ouverture d'injection (132) du tube externe (103) étant en liaison fluidique avec le volume entre le tube central (102) et le tube externe (103) pour introduire un gaz de refroidissement dans la zone de décomposition.

2. Lance d'injection (100) selon la revendication 1, la distance entre la buse d'atomisation (121) et l'ouverture d'injection (132) étant comprise entre 2,5 et 14,0 m, plus particulièrement entre 5,0 et 13,0 m, plus particulièrement entre 7,0 et 12,0 m, et tout particulièrement entre 9,0 et 11,0 m.

3. Lance d'injection (100) selon la revendication 1 ou 2, le tube externe (103) étant fermé entre la buse d'atomisation (121) et l'ouverture d'injection (132).

4. Lance d'injection (100) selon l'une quelconque des revendications 1 à 3, le tube interne (101), le tube central (102) et/ou le tube externe (103) étant fabriqués en acier inoxydable.

5. Système de traitement de gaz de combustion comprenant une chaudière (200) et une lance d'injection (100) selon l'une quelconque des revendications 1 à 4,
- la chaudière (200) comprenant une paroi (210) ;
- la lance d'injection (100) faisant saillie à travers la paroi (210) de la chaudière (200) ; et
- la zone de décomposition (131) de la lance d'injection (100) étant située à l'intérieur de la chaudière (200).

6. Système de traitement de gaz de combustion selon la revendication 5,
- la lance d'injection (100) comprenant une première extrémité (105) et une seconde extrémité (106) ;
- la première extrémité (105) étant située à l'intérieur de la chaudière (200) et la seconde extrémité (106) étant située à l'extérieur de la chaudière (200) ;
- au niveau de la première extrémité (105), une ouverture d'injection (132) étant disposée pour injecter un agent réducteur dans un flux de gaz de combustion dans la chaudière (200) ;
- au niveau de la seconde extrémité (106), un conduit de liquide (110) situé à l'intérieur du tube interne (101) étant relié fluidiquement à une conduite d'alimentation pour fournir un précurseur d'agent réducteur, un conduit de gaz d'atomisation (120) situé entre le tube interne (101) et le tube central (102) étant relié fluidiquement à une conduite d'alimentation en gaz d'atomisation, et un conduit de gaz de refroidissement (130) situé entre le tube central (102) et le tube externe (103) étant relié fluidiquement à une conduite d'alimentation en gaz de refroidissement.

7. Système de traitement de gaz de combustion selon la revendication 5 ou 6, la lance d'injection (100) s'étendant à l'intérieur de la chaudière (200) sur une distance de 1,0 à 15,0 m, plus particulièrement entre 2,5 et 14,0 m, plus particulièrement entre 5,0 et 13,0 m, plus particulièrement de 7,0 à 12,0 m, et tout particulièrement de 9,0 à 11,0 m.

8. Système de traitement de gaz de combustion selon la revendication 6 ou 7, le conduit de gaz d'atomisation (120) se terminant par une buse d'atomisation (121) qui est située à l'intérieur de la chaudière (200).

9. Procédé d'injection d'un agent réducteur dans un système de traitement de gaz de combustion par l'intermédiaire d'une lance d'injection (100) selon l'une quelconque des revendications 1 à 4, comprenant un tube interne (101), un tube central (102) se terminant par une buse d'atomisation, et un tube externe (103) se terminant par une ouverture d'injection (132), le procédé comprenant les étapes consistant à :
- fournir un liquide précurseur d'agent réducteur à travers un conduit de liquide (110) situé dans le tube interne (101) de la lance d'injection (100) ;
- fournir un gaz d'atomisation à travers un conduit de gaz d'atomisation (120) situé entre le tube interne (101) et le tube central (102) de la lance d'injection (100) ;
- fournir un gaz de refroidissement à travers un conduit de gaz de refroidissement (130) situé entre le tube central (102) et le tube externe (103) de la lance d'injection (100) ;
- atomiser le précurseur d'agent réducteur au moyen d'un gaz d'atomisation, obtenant ainsi un précurseur d'agent réducteur gazeux atomisé ;
- transporter le précurseur d'agent réducteur gazeux atomisé à travers une zone de décomposition (131) au moyen d'un gaz de refroidissement, décomposant ainsi le précurseur d'agent réducteur et obtenant un agent réducteur gazeux, la zone de décomposition étant située entre la buse d'atomisation (121) et l'ouverture d'injection (132) et la distance entre la buse d'atomisation (121) et l'ouverture d'injection (132) étant comprise entre 1,0 et 15,0 m ; et
- injecter l'agent réducteur gazeux par une ouverture d'injection (132) dans le système de traitement de gaz de combustion,
l'ouverture d'injection (132) étant maintenue à une température d'au moins 200,0 °C,
la température du tube externe (103) étant d'au moins 200,0 °C et le gaz d'atomisation, le gaz de refroidissement, le précurseur d'agent réducteur atomisé et l'agent réducteur étant maintenus à une température inférieure à 600,0 °C.

10. Procédé de traitement d'un gaz de combustion au moyen d'un système de traitement de gaz de combustion selon l'une quelconque des revendications 6 à 8, le procédé comprenant les étapes consistant à :
- fournir un liquide précurseur d'agent réducteur à travers le conduit de liquide (110) ;
- fournir un gaz d'atomisation à travers le conduit de gaz d'atomisation (120) ;
- fournir un gaz de refroidissement à travers le conduit de gaz de refroidissement (130) ;
- atomiser le précurseur d'agent réducteur au moyen du gaz d'atomisation, obtenant ainsi un précurseur d'agent réducteur gazeux atomisé ;
- transporter le précurseur d'agent réducteur gazeux atomisé à travers une zone de décomposition (131) au moyen d'un gaz de refroidissement, décomposant ainsi le précurseur d'agent réducteur et obtenant un agent réducteur gazeux ; et
- injecter l'agent réducteur gazeux à travers l'ouverture d'injection (132) dans un gaz de combustion dans la chaudière (200),
l'ouverture d'injection (132) étant maintenue à une température d'au moins 200,0 °C,
la température du tube externe (103) étant d'au moins 200,0 °C et le gaz d'atomisation, le gaz de refroidissement, le précurseur d'agent réducteur atomisé et l'agent réducteur étant maintenus à une température inférieure à 600,0 °C.

11. Procédé selon la revendication 9 ou 10, le précurseur d'agent réducteur étant un liquide, plus particulièrement le précurseur d'agent réducteur étant une solution aqueuse d'urée et/ou le gaz d'atomisation et/ou le gaz de refroidissement étant de l'air.
